# EUROPÄISCHE PATENTSCHRIFT

(11) **EP 3 265 365 B1**
(45) Veröffentlichungstag und Bekanntmachung des Hinweises auf die Patenterteilung: **20.05.2020**
(21) Anmeldenummer: 16706153.0
(22) Anmeldetag: 15.02.2016
(51) Int. Cl.: B62D 25/04

(54) **PRESSGEHÄRTETES BLECHFORMTEIL MIT UNTERSCHIEDLICHEN BLECHDICKEN UND FESTIGKEITEN**
PRESS-HARDENED SHAPED METAL SHEET HAVING DIFFERENT SHEET THICKNESSES AND STRENGTHS
PIÈCE PROFILÉE EN TÔLE TREMPÉE À LA PRESSE AYANT DIFFÉRENTES ÉPAISSEURS ET RIGIDITÉS

(30) Priorität: 02.03.2015 DE 102015203644
(43) Veröffentlichungstag der Anmeldung: 10.01.2018
(73) Patentinhaber: Bayerische Motoren Werke Aktiengesellschaft, 80809 München (DE)
(72) Erfinder: AUGUSTIN, Daniel, 80807 München (DE); GOLDYN, Lukasz, 80807 München (DE); KERSCHER, Martin, 84164 Dornwang (DE); PFESTORF, Markus, 85375 Neufahrn (DE)
(86) Internationale Anmeldenummer: PCT/EP2016/053110
(87) Internationale Veröffentlichungsnummer: WO 2016/139053

(56) Entgegenhaltungen:
- EP-A1- 0 788 849
- EP-A1- 2 754 603
- KR-B1- 101 491 319
- US-A1- 2011 175 401

## Beschreibung

Die Erfindung betrifft ein pressgehärtetes Blechformteil mit unterschiedlichen Blechdicken und Festigkeiten, wobei es sich bevorzugt um ein Fahrwerk- oder Karosseriebauteil und insbesondere um ein Strukturbauteil für ein Kraftfahrzeug handelt.

Pressgehärtete Blechformteile, die durch Umformen oder Formpressen eines zuvor auf Austenitisierungstemperatur erwärmten Stahlblechmaterials und einen im Wesentlichen gleichzeitigem Abschreckhärten hergestellt werden, sind aus dem Stand der Technik bekannt. Durch das Presshärten werden Festigkeiten von bis zu 1650 MPa und mehr erreicht. Pressgehärtete Blechformteile werden z. B. als sicherheitsrelevante Fahrwerkteile oder Karosseriebauteile, insbesondere Strukturbauteile (bspw. A- und B-Säulen, Längsträger, Querträger, Stirnwand- oder Tunnelverstärkungen und dergleichen), eingesetzt, um die zunehmenden Sicherheits- und Leichtbauanforderungen zu erfüllen.

Aus dem Stand der Technik sind verschiedene Verfahrensweisen für das Presshärten bekannt, wie das direkte Verfahren (bzw. das direkte Presshärten) ohne Vorformen des Blechmaterials und das indirekte Verfahren (bzw. das indirekte Presshärten) mit einer Vorformung des Blechmaterials, wozu bspw. auf die einleitenden Erläuterungen in der DE 10 2011 053 939 A1 hingewiesen wird.

Die DE 197 58 918 B4 beschreibt ein Verfahren zur Herstellung eines pressgehärteten Blechformteils, das auch weiche, d. h. weniger gehärtete oder ungehärtete Bereiche aufweist. Ein solches Blechformteil wird auch als partiell pressgehärtetes Blechformteil bezeichnet. Auch die DE 10 2010 004 081 B3 beschreibt ein Verfahren zur Herstellung eines pressgehärteten Blechformteils, das mindestens zwei Gefügebereiche unterschiedlicher Duktilität aufweist. Ferner sind so genannte Übergangsbereiche zwischen Bereichen unterschiedlicher Duktilität erwähnt. Solche Übergangsbereiche sind auch in der DE 10 2010 012 825 B4 beschrieben.

Die den nächstliegenden Stand der Technik repräsentierende DE 10 2011 009 891 A1 beschreibt ein Verfahren zum Herstellen eines pressgehärteten Blechformteils aus einer gewalzten Blechplatine mit mindestens zwei Bereichen unterschiedlicher Materialdicke. Ferner ist vorteilhaft vorgesehen, dass das herzustellende Blechformteil nur partiell warmumgeformt und anschließend abgeschreckt wird. Auch ist es möglich, das pressgehärtete Blechformteil durch partielles Wärmenachbehandeln gezielt wiederum in seiner Bauteilsteifigkeit und seinen Bauteileigenschaften der gewünschten Verwendung anzupassen.

Die EP 2 754 603 A1 beschreibt die Herstellung einer B-Säule aus einer Tailored Blank. Die Tailored Blank weist zwei Abschnitte auf, nämlich einen oberen Abschnitt (24) aus Bor-Stahl und einen unteren Abschnitt (26) aus duktilerem Material als Bor-Stahl. Die beiden Abschnitte (24) und (26) sind entlang einer Schweißnaht (28) verbunden. Der obere Abschnitt (24) ist aus einer Tailored Rolled Blank (TRB) gebildet und umfasst drei Bereiche mit unterschiedlichen Blechdicken sowie zwei Blechdickenübergangsbereiche. Bei einem Presshärten wird wenigstens ein Teil des oberen Abschnitts (24) gehärtet, sodass die hergestellte B-Säule im oberen Abschnitt (24) wenigstens eine gehärtete Zone aufweist.

Zum Stand der Technik wird ergänzend auch noch auf die DE 10 2005 038 488 A1 und die DE 10 2010 004 081 B3 hingewiesen.

Mit der Erfindung soll ein optimiertes, d. h. insbesondere ein an die vorgesehene Verwendung noch besser anpassbares, pressgehärtetes Blechformteil der eingangs genannten Art bereitgestellt werden.

Gemäß Anspruch 1 weist das erfindungsgemäße pressgehärtete Blechformteil wenigstens zwei benachbarte Bereiche auf, die mit unterschiedlichen Blechdicken bzw. Materialdicken und mit unterschiedlichen Festigkeiten ausgebildet sind, derart, dass einer dieser Bereiche pressgehärtet und der andere Bereich ungehärtet oder nur gering gehärtet ist. Ferner ist zwischen diesen beiden Bereichen ein Übergangsbereich vorgesehen, der zugleich als Dickenübergangsbereich und als Festigkeitsübergangsbereich ausgebildet bzw. gestaltet ist.

Die Erfindung umgeht Festigkeitssprünge und Blechdickensprünge zwischen den beiden benachbarten Bereichen, die mit unterschiedlichen Festigkeiten und Blechdicken ausgebildet sind, durch einen dazwischen befindlichen bzw. angeordneten Übergangsbereich. Der Übergangsbereich hat somit zumindest eine Doppelfunktion, womit gemeint ist, dass der Festigkeitsübergangsbereich im Wesentlichen identisch ist mit dem Blechdickenübergangsbereich, bzw. dass der Blechdickenübergangsbereich im Wesentlichen dem Festigkeitsübergangsbereich entspricht. Im Wesentlichen heißt, dass der Blechdicken- und der Festigkeitsübergangsbereich im Rahmen der Herstellungsmöglichkeiten deckungsgleich sein sollen und sich quasi in einem Übergangsbereich vereinen, so dass keiner dieser Bereiche größer ist oder nur unwesentlich größer ist als der andere. Mit dem Übergangsbereich ist ein gradueller, d. h. allmählicher, Blechdickenübergang und Festigkeitsübergang zwischen den betreffenden benachbarten Bereichen herbeigeführt. Ein erfindungsgemäßes Blechformteil kann mehrere derart gestaltete Übergangsbereiche aufweisen, die jeweils zwischen benachbarten Bereichen mit unterschiedlichen Festigkeiten und Blechdicken angeordnet bzw. ausgebildet sind.

Für die Herstellung eines erfindungsgemäßen Blechformteils wird ein presshärtegeeignetes Stahlblechmaterial (insbesondere mangan- und borlegierte Stähle, wie bspw. ein 20MnB5 oder ein 22MnB5) verwendet. Beim Presshärten des verwendeten Stahlblechmaterials (was im Rahmen der Erfindung sowohl nach dem direkten als auch nach dem indirekten Verfahren, wie eingangs erläutert, erfolgen kann) wird zwar dessen Festigkeit heraufgesetzt, im Gegenzug jedoch dessen Duktilität (worunter vereinfachend das Formänderungsvermögen verstanden werden kann) verringert. Allgemein gilt, dass die Duktilität umso geringer ist, je höher die beim Presshärten erzielte Festigkeit ist. Ein ungehärteter oder nur gering gehärteter Bereich weist daher eine höhere Duktilität als ein pressgehärteter Bereich auf. Die Festigkeit und Duktilität in einem bestimmten Bereich ergeben sich aus der dort vorhandenen Gefügestruktur. Ein erfindungsgemäßer Übergangsbereich schafft somit auch einen, insbesondere graduellen, Duktilitätsübergang zwischen den betreffenden Blechformteilbereichen. Insofern kann der Übergangsbereich auch ein Gefügeübergangsbereich sein.

Bevorzugt ist das erfindungsgemäße Blechformteil aus einem Tailored Rolled Blank hergestellt. Ein Tailored Rolled Blank ist eine Blechplatine, die aus einem gewalzten Blechmaterial mit unterschiedlichen Blechdicken zugeschnitten ist. Das Blechmaterial wird bspw. durch flexibles Walzen eines Metallbandes hergestellt, derart, dass der relevante Walzenabstand und damit der hierüber definierte Walzspalt während des Banddurchlaufs definiert verändert wird, so dass sich in Durchlaufrichtung bzw. über der Länge des Metallbandes Bandabschnitte mit unterschiedlichen Band- bzw. Blechdicken ergeben. Die Blechdickenübergänge sind für gewöhnlich stetig oder zumindest näherungsweise stetig verlaufend ausgebildet und erstrecken sich streifenartig quer zur Durchlaufrichtung.

Die konkrete Ausgestaltung eines Blechdickenübergangs bzw. Blechdickenübergangsbereichs zwischen zwei benachbarten Platinenbereichen mit unterschiedlichen Blechdicken bestimmt für gewöhnlich die Breite des sich an entsprechender Stelle am Blechformteil ergebenden erfindungsgemäßen Übergangsbereichs (oder hat zumindest Einfluss hierauf). Mit anderen Worten formuliert kann dies heißen, dass sich der Übergangsbereich an einem erfindungsgemäßen pressgehärteten Blechformteil aus dem entsprechenden Blechdickenübergangsbereich der (für die Herstellung verwendeten) Blechplatine ergibt, wobei diesem Blechdickenübergangsbereichs in der Blechplatine beim Presshärten definiert (im Sinne von nicht zufällig) ein Festigkeitsübergangsbereich überlagert wurde. Der Übergangsbereich an einem erfindungsgemäßen pressgehärteten Blechformteil kann eine bevorzugte Breite von 20 mm bis 60 mm und insbesondere von 40 mm bis 50 mm aufweisen, wobei dies bevorzugt auch der Breite des streifenartigen Blechdickenübergangs in der Blechplatine bzw. im Metallband entspricht.

Es ist vorgesehen, dass einer der durch den erfindungsgemäßen Übergangsbereich verbundenen Bereiche pressgehärtet ist, wobei dies insbesondere der die größere Blechdicke bzw. Materialdicke aufweisende Bereich, also der dickere Bereich ist.

Das erfindungsgemäße pressgehärtete Blechformteil ist bevorzugt ohne eine Oberflächenbeschichtung ausgebildet. Das erfindungsgemäße pressgehärtete Blechformteil kann jedoch auch eine metallische Korrosionsschutzbeschichtung aufweisen. Bevorzugt handelt es sich um einen Aluminium-/Aluminiumlegierungsüberzug oder um einen Zink-IZinklegierungsüberzug. Die Korrosionsschutzbeschichtung kann bereits auf das Ausgangsblechmaterial, das bspw. zur Herstellung des Tailored Rolled Blanks dient, aufgebracht sein. Eine solche vorab aufgebrachte Schutzschicht kann bspw. auch eine Verzunderung beim Presshärten vermeiden oder zumindest verringern.

Bei dem erfindungsgemäßen pressgehärteten Blechformteil handelt es sich bevorzugt um ein Fahrwerk- oder Karosseriebauteil für ein Kraftfahrzeug. Besonders bevorzugt handelt es sich um ein sicherheits- und crashrelevantes Strukturbauteil für die Kraftfahrzeugkarosserie. Insbesondere handelt es sich um eine Säulenverstärkung, vorrangig für die B-Säule.

Mit dem nebengeordneten Anspruch erstreckt sich die Erfindung auch auf eine als pressgehärtetes Blechformteil ausgebildete Säulenverstärkung für eine Kraftfahrzeugkarosserie, insbesondere für die B-Säule. Diese Säulenverstärkung weist einen pressgehärteten Mittelbereich und einen sich daran anschließenden ungehärteten oder nur gering gehärteten Fußbereich auf. Diese Bereiche sind mit unterschiedlichen Blechdicken ausgebildet, wobei zwischen diesen Bereichen ein Übergangsbereich vorgesehen ist, der gemäß den vorausgehenden Erläuterungen zugleich als Dickenübergangsbereich und als Festigkeitsübergangsbereich gestaltet ist. Weiterbildungen und Ausgestaltungen ergeben sich analog zu den vorausgehenden Erläuterungen. Bevorzugt weist die erfindungsgemäße Säulenverstärkung nur einen einzigen derartig multifunktionellen Übergangsbereich auf, der sich zwischen dem weichen Fußbereich und dem festen bzw. harten Mittelbereich befindet.

Im Fußbereich wird durch das weiche Blechmaterial im Crashfall eine gezielte Deformation (bspw. ein Einknicken) ermöglicht. Reißer und Sprödbrüche werden verhindert. Ferner werden nachteilige Auswirkungen von Kerbspannungen verringert.

Bevorzugt ist vorgesehen, dass der pressgehärtete Mittelbereich der erfindungsgemäßen Säulenverstärkung mehrere Abschnitte bzw. Teilbereiche mit unterschiedlichen Blechdicken aufweist, wobei diese Teilbereiche mit einer im Wesentlichen gleichen Festigkeit ausgebildet sind. Auch der Fußbereich kann mehrere Abschnitte bzw. Teilbereiche aufweisen, die mit unterschiedlichen Blechdicken und/oder unterschiedlichen Festigkeiten ausgebildet sind. Insbesondere kann der Fußbereich auch partiell pressgehärtet sein.

Im Fußbereich einer erfindungsgemäßen Säulenverstärkung kann die Presshärtung des Blechmaterials durch ofenseitige Maßnahmen (bspw. durch mithilfe von Abschirmblechen unterteilte Ofenkammern mit unterschiedlichen Temperaturen oder durch Verwendung von Abdeckungen für das zu erwärmende Blechmaterial, was beides eine Reduzierung der Erwärmungstemperatur bewirkt) und/oder durch werkzeugseitige Maßnahmen (bspw. durch Luftspalte im entsprechenden Werkzeugbereich oder durch Heizeinrichtungen zur partiellen Beheizung des Presshärtewerkzeugs im entsprechenden Werkzeugbereich, was beides eine Reduzierung der Abkühlgeschwindigkeit bewirkt) verhindert werden, um dadurch ein weiches oder zumindest nur gering gehärtetes Gefüge zu erhalten. Selbiges gilt für andere erfindungsgemäße pressgehärtete Blechformteile. Die Erzeugung weicher Bereiche durch eine sich an das Presshärten anschließende partielle Wärmebehandlung (bspw. ein nachträgliches Anlassen des betreffenden zuvor pressgehärteten Bereichs) ist möglich, wird jedoch nicht bevorzugt. Bevorzugt ist vorgesehen, dass die erfindungsgemäßen Blechformteile nach dem Presshärten und einem üblicherweise noch ganz oder teilweise durchzuführenden Beschnitt im Wesentlichen verbaufertig sind. Dem Presshärten kann sich, insbesondere bei unbeschichtetem, gegebenenfalls aber auch bei beschichtetem Blechmaterial, ein Reinigen anschließen.

Die Erfindung wird nachfolgend anhand schematischer Figuren beispielhaft und in nicht einschränkender Weise näher erläutert.
- Fig. 1: zeigt in einer Draufsicht eine Säulenverstärkung für eine PKW-Kraftfahrzeugkarosserie.
- Fig. 2: zeigt in einer vergrößerten Schnittdarstellung den Übergangsbereich zwischen dem Fußbereich und dem Mittelbereich an der Säulenverstärkung aus Fig. 1.

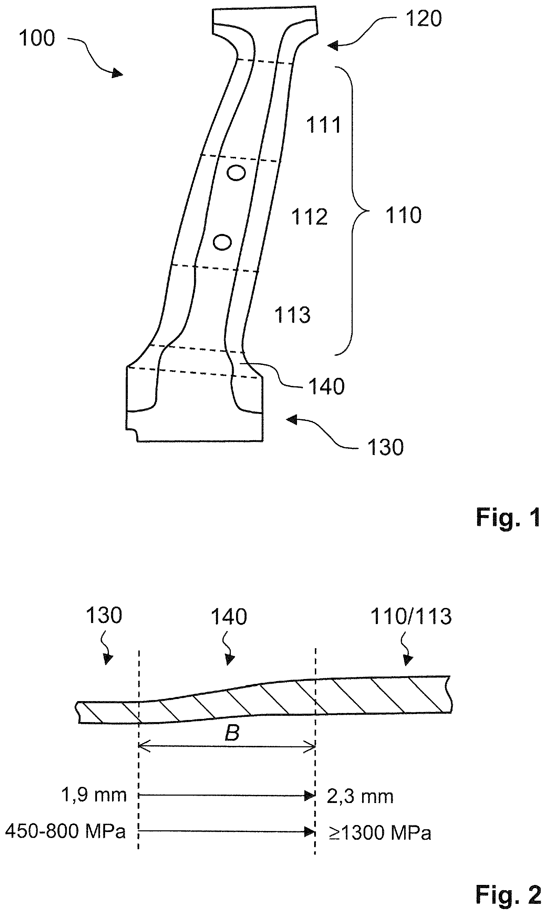

Fig. 1 zeigt eine Säulenverstärkung (Innensäule) 100 für eine B-Säule. Die Säulenverstärkung ist als pressgehärtetes Blechformteil ausgebildet, welches Bereiche mit unterschiedlichen Blechdicken und unterschiedlichen Festigkeiten aufweist, wodurch sowohl eine beanspruchungs- bzw. anforderungsgerechte Gestaltung (die Anforderungen sind in den unterschiedlichen Bereichen verschieden) als auch eine gewichtsoptimierte Ausgestaltung erreicht wird. Die Säulenverstärkung 100 ist aus einer einzelnen Rolled Tailored Blank hergestellt.

In dem gezeigten Beispiel weist die Säulenverstärkung 100 einen pressgehärteten Mittelbereich 110 auf, in dem das Blechmaterial eine durch Presshärten erzielte Festigkeit von bspw. mindestens 1300 MPa aufweist. Der Mittelbereich 110 umfasst mehrere im Wesentlichen gleichfeste (d. h. mit gleicher Festigkeit ausgebildete) Abschnitte bzw. Teilbereiche mit unterschiedlichen Blechdicken. Der kopfseitige Teilbereich 111 weist bspw. eine Blechdicke von 2,3 mm auf, der mittlere Teilbereich 112 weist bspw. eine Blechdicke von 2,5 mm auf und der fußseitige Teilbereich 113 weist bspw. eine Blechdicke von 2,3 mm auf. Die Übergänge sind als stetige Übergänge, d. h. ohne Blechdickensprünge, ausgebildet. Die Säulenverstärkung 100 weist ferner einen Fußbereich 130 auf, in dem das Blechmaterial nur gering gehärtet oder ungehärtet und somit weich ist und bspw. eine Festigkeit von 450 MPa bis 800 MPa hat. Die Blechdicke im Fußbereich 130 beträgt bspw. 1,9 mm. Die Säulenverstärkung 100 weist ferner auch einen Kopfbereich 120 auf, in dem das Blechmaterial ebenfalls pressgehärtet ist und, wie auch der Mittelbereich 110, eine Festigkeit von bspw. mindestens 1300 MPa aufweist. Die Blechdicke im Kopfbereich 120 beträgt bspw. 1,9 mm.

Die Säulenverstärkung 100 ist somit im Mittelbereich 110, an den besonders hohe Festigkeits- und Steifigkeitsanforderungen gestellt werden (bspw. wegen dem Insassenschutz sowie wegen der Anbindung von Türscharnieren und Türschlössern), besonders dick und besonders fest ausgebildet. Im Fußbereich 130, der für die Anbindung der Säulenverstärkung 100 an einen Seitenschweller oder dergleichen vorgesehen ist, wird durch das weniger feste bzw. weichere Blechmaterial im Crashfall eine gezielte Verformung (bspw. ein Einknicken) ermöglicht und Reißer und Sprödbrüche werden verhindert.

Erfindungsgemäß ist zwischen dem pressgehärteten Mittelbereich 110 und dem weichen Fußbereich 130, wobei diese Bereiche auch unterschiedliche Blechdicken aufweisen, ein Übergangsbereich 140 ausgebildet, der nicht nur als Dickenübergangsbereich, sondern auch als Festigkeitsübergangsbereich gestaltet ist. Der Übergangsbereich der Festigkeit entspricht also im Wesentlichen dem Übergangsbereich der Blechdicke. Entlang des Übergangsbereichs 140 sind der Mittelbereich 110 bzw. dessen Teilbereich 113 und der Fußbereich 130 zueinander abgegrenzt, bzw. gehen im Übergangsbereich 140 ineinander über.

Der streifenartige Übergangsbereich 140 ist in Fig. 2 in einer vergrößerten Schnittdarstellung veranschaulicht. Innerhalb dieses Übergangsbereichs 140 geht die Festigkeit des Blechmaterials von 450 MPa bis 800 MPa (im Fußbereich 130) allmählich bzw. graduell in eine Festigkeit von mindestens 1300 MPa (im Mittelbereich 110 bzw. in dessen fußseitigem Teilbereich 113) über bzw. steigt entsprechend an. Ebenso steigt innerhalb dieses Übergangsbereichs 140 die Blechdicke graduell und somit stufen- bzw. sprungfrei von 1,9 mm auf 2,3 mm an (vom Fußbereich 130 zum fußseitigen Teilbereich 113).

Der Übergangsbereich 140 weist bevorzugt eine Breite B von 20 mm bis 60 mm und insbesondere von 40 mm bis 50 mm auf. Der Übergangsbereich 140 kann auch eine variable Breite B, womit eine sich über dem Verlauf (gemäß Fig. 1) verändernde Breite gemeint ist, aufweisen.

Die Erfindung bietet die Vorteile, dass die Eigenschaften eines erfindungsgemäßen pressgehärteten Blechformteils, vor allem an den Übergangsstellen zwischen Bereichen mit unterschiedlichen Festigkeiten und Blechdicken, sehr präzise ausgebildet sind und dass die qualitätsreproduzierende Herstellung mit einem vergleichsweise geringen Werkzeuggestaltungs- und -einarbeitungsaufwand möglich ist.

### Bezugszeichenliste

### Pressgehärtetes Blechformteil mit unterschiedlichen Blechdicken und Festigkeiten

- 100: Säulenverstärkung (Blechformteil)
- 110: Mittelbereich
- 111: Teilbereich
- 112: Teilbereich
- 113: Teilbereich
- 120: Kopfbereich
- 130: Fußbereich
- 140: Übergangsbereich
- B: Breite

## Patentansprüche

1. Pressgehärtetes Blechformteil (100), welches unterschiedliche Blechdicken und Festigkeiten aufweist,
**dadurch gekennzeichnet, dass**
wenigstens zwei benachbarte Bereiche (110, 130) vorgesehen sind, die mit unterschiedlichen Blechdicken und mit unterschiedlichen Festigkeiten ausgebildet sind, derart, dass einer dieser Bereiche (110) pressgehärtet und der andere Bereich (130) ungehärtet oder nur gering gehärtet ist, wobei zwischen diesen Bereichen (110, 130) ein Übergangsbereich (140) ausgebildet ist, der zugleich als Dickenübergangsbereich und als Festigkeitsübergangsbereich gestaltet ist, derart, dass mit diesem Übergangsbereich (140) ein gradueller Blechdicken- und Festigkeitsübergang zwischen den benachbarten Bereichen (110, 120) herbeigeführt ist.

2. Blechformteil (100) nach Anspruch 1,
**dadurch gekennzeichnet, dass**
dieses aus einem Tailored Rolled Blank hergestellt ist.

3. Blechformteil (100) nach einem der vorausgehenden Ansprüche,
**dadurch gekennzeichnet, dass**
der Übergangsbereich (140) eine Breite von 20 mm bis 60 mm und bevorzugt von 40 mm bis 50 mm aufweist.

4. Blechformteil (100) nach einem der vorausgehenden Ansprüche,
**dadurch gekennzeichnet, dass**
der die größere Blechdicke aufweisende Bereich (110) pressgehärtet ist.

5. Blechformteil (100) nach einem der vorausgehenden Ansprüche,
**gekennzeichnet durch**
eine metallische Korrosionsschutzbeschichtung.

6. Als pressgehärtetes Blechformteil ausgebildete Säulenverstärkung (100) für eine Kraftfahrzeugkarosserie, insbesondere für die B-Säule,
**dadurch gekennzeichnet, dass**
diese einen pressgehärteten Mittelbereich (110) und einen sich daran anschließenden ungehärteten oder nur gering gehärteten Fußbereich (130) aufweist, die mit unterschiedlichen Blechdicken ausgebildet sind, wobei ein Übergangsbereich (140) zwischen diesen Bereichen (110, 130) ausgebildet ist, der zugleich als Dickenübergangsbereich und als Festigkeitsübergangsbereich gestaltet ist, derart, dass mit diesem Übergangsbereich (140) ein gradueller Blechdicken- und Festigkeitsübergang zwischen den benachbarten Bereichen (110, 120) herbeigeführt ist.

7. Säulenverstärkung (100) nach Anspruch 6,
**gekennzeichnet durch**
eine Weiterbildung gemäß wenigstens einem der vorausgehenden Ansprüche 2 bis 5.

8. Säulenverstärkung (100) nach Anspruch 6 oder 7,
**dadurch gekennzeichnet, dass**
der pressgehärtete Mittelbereich (110) mehrere Teilbereiche (111, 112, 113) mit unterschiedlichen Blechdicken aufweist, wobei diese Teilbereiche (111, 112, 113) mit einer im Wesentlichen gleichen Festigkeit ausgebildet sind.

## Claims

1. A press-hardened shaped sheet metal part (100) which has different sheet thicknesses and strengths,
**characterised in that**
at least two adjacent zones (110, 130) are provided which are formed with different sheet thicknesses and with different strengths, such that one of these zones (110) is press-hardened and the other zone (130) is non-hardened or only slightly hardened, wherein a transition zone (140) which at the same time is configured as a thickness transition zone and as a strength transition zone is formed between these zones (110, 130), such that with this transition zone (140) a gradual transition in sheet thickness and strength is brought about between the adjacent zones (110, 120).

2. A shaped sheet metal part (100) according to Claim 1,
**characterised in that**
it is produced from a tailored rolled blank.

3. A shaped sheet metal part (100) according to one of the preceding claims,
**characterised in that**
the transition zone (140) has a width of 20 mm to 60 mm and preferably of 40 mm to 50 mm.

4. A shaped sheet metal part (100) according to one of the preceding claims,
**characterised in that**
the zone (110) having the greater sheet thickness is press-hardened.

5. A shaped sheet metal part (100) according to one of the preceding claims,
**characterised by**
a metallic anti-corrosion coating.

6. A pillar reinforcement (100) formed as a press-hardened shaped sheet metal part for a motor vehicle body, especially for the B-pillar,
**characterised in that**
it has a press-hardened middle zone (110), and a non-hardened or only slightly hardened bottom zone (130) adjoining it, which zones are formed with different sheet thicknesses, with a transition zone (140) which is configured at the same time as a thickness transition zone and as a strength transition zone being formed between these zones (110, 130), such that with this transition zone (140) a gradual transition in sheet thickness and strength between the adjacent zones (110, 120) is brought about.

7. A pillar reinforcement (100) according to Claim 6,
**characterised by**
a refinement according to at least one of the preceding Claims 2 to 5.

8. A pillar reinforcement (100) according to Claim 6 or 7,
**characterised in that**
the press-hardened middle zone (110) has a plurality of partial zones (111, 112, 113) with different sheet thicknesses, these partial zones (111, 112, 113) being formed with substantially the same strength.

## Revendications

1. Pièce de tôle mise en forme, trempée sur presse (100), mise en forme ayant des épaisseurs de tôle et des résistances différentes,
**caractérisée en ce qu'**
elle a au moins deux zones voisines (110, 130) avec des épaisseurs de tôle différentes et des résistances différentes de façon que l'une des zones (110) soit trempée sur presse et l'autre zone (130) ne soit pas trempée ou ne le soit que faiblement, et
entre ces zones (110, 130) on a une zone transitoire (140) qui constitue à la fois une zone de transition d'épaisseur et une zone de transition de résistance de façon que cette zone transitoire (140) assure une transition progressive de l'épaisseur et de la résistance entre les zones voisines (110, 120).

2. Pièce de tôle mise en forme (100) selon la revendication 1,
**caractérisée en ce qu'**
elle est réalisée à partir d'un tôle Tailored Rolled Blank.

3. Pièce de tôle mise en forme (100) selon l'une des revendications précédentes,
**caractérisée en ce que**
la zone transitoire (140) a une largeur de 20 mm à 60 mm et de préférence une largeur comprise entre 40 mm et 50 mm.

4. Pièce de tôle mise en forme (100) selon l'une des revendications précédentes,
**caractérisée en ce que**
la plus grande épaisseur de la tôle de la zone (110) est trempée sur presse.

5. Pièce de tôle mise en forme (100) selon l'une des revendications précédentes,
**caractérisée par**
un revêtement métallique anti-corrosion.

6. Colonne de renfort (100) réalisée sous la forme d'une pièce en tôle mise en forme, trempée à la presse pour une carrosserie de véhicule automobile, notamment pour la colonne B,
renfort **caractérisé en ce qu'**
elle a une zone médiane (110) trempée sur presse et une zone de talon (130) adjacente, non trempée ou seulement faiblement trempée et qui a différentes épaisseurs de tôle,
une zone transitoire (140) entre ces zones (110, 130) constitue en même temps la transition d'épaisseur et la transition de résistance de façon que cette zone transitoire (140) assure une transition progressive de l'épaisseur de la tôle et de la résistance de la tôle entre les zones voisines (110, 120).

7. Renfort de colonne (100) selon la revendication 6,
**caractérisé par**
un développement selon au moins l'une des revendications 2 à 5.

8. Renfort de colonne (100) selon la revendication 6 ou 7,
**caractérisé en ce que**
la zone médiane (110) trempée sur presse comprend plusieurs zones partielles (111, 112, 113) avec des épaisseurs de tôle différentes, ces zones partielles (111, 112, 113) ayant une résistance pratiquement identique.
